# FASCICULE DE BREVET EUROPEEN

(11) **EP 0 884 215 B1**
(45) Date de publication et mention de la délivrance du brevet: **25.09.2002**
(21) Numéro de dépôt: 98420099.8
(22) Date de dépôt: 11.06.1998
(51) Int. Cl.: B60P 3/20

(54) **Aménagement isothermique pour véhicule utilitaire**
Isothermische Einbauvorrichtung für ein Arbeitsfahrzeug
Isothermal assembly for utility vehicle

(30) Priorité: 11.06.1997 FR 9707534
(43) Date de publication de la demande: 16.12.1998
(73) Titulaire: Lamberet Constructions Isothermes, 01380 St-Cyr-sur-Menthon (FR)
(72) Inventeur: Lamberet, Paul Louis, 01540 Vonnas (FR)
(74) Mandataire: Perrier, Jean-Pierre

(56) Documents cités:
- EP-A- 0 466 588
- DE-A- 2 114 616
- DE-U- 1 941 591
- FR-A- 2 398 639
- FR-A- 2 523 090
- GB-A- 2 265 701
- US-A- 4 163 577

## Description

L'invention est relative à un aménagement isothermique pour véhicule utilitaire, comme par exemple connu du document EP-A-0 466 588.

Elle concerne plus particulièrement les véhicules utilitaires de type camionnette à caisson tôlé, c'est-à-dire les véhicules dans lesquels la carrosserie du poste de conduite se prolonge jusqu'à l'arrière du véhicule pour former un caisson accessible par l'arrière par une ou deux portes battantes, ou relevable, ou par une ou deux portes latérales optionnelles..

Actuellement, pour disposer d'un véhicule équipé d'un compartiment isolé thermiquement, alors que ce véhicule est fourni non équipé par le constructeur, il faut avoir recours à un carrossier qui assemble dans le caisson tôlé des éléments de panneaux isolants découpés à la demande.

Cet aménagement nécessite du temps et du personnel spécialisé et conduit à une intervention coûteuse.

La présente invention a pour objet de remédier à ces inconvénients en fournissant un aménagement isothermique prêt à être monté, c'est-à-dire livré à l'état démonté, et pouvant être assemblé rapidement par un personnel non spécialisé et, par exemple, par le personnel d'un garagiste.

A cet effet, l'aménagement isothermique selon l'invention comprend des éléments indépendants composés chacun d'une mousse en matériau synthétique isolant et d'au moins un parement interne, à savoir :
- un ou deux panneaux se fixant contre la porte arrière du véhicule,
- un élément inférieur en forme de cuvette et composé d'un fond, de deux ailes verticales et d'une paroi transversale avant, les deux ailes ayant une hauteur supérieure à l'encombrement vertical des capots de passages de roues saillant du plancher du caisson tôlé,
- un panneau vertical avant, venant en appui sur la paroi transversale avant de la cuvette de l'élément inférieur,
- et deux éléments supérieurs ayant, en section transversale la forme d'un "C" à branches inégales, s'insérant, verticalement, entre l'élément inférieur et le toit du caisson, et, longitudinalement, entre le panneau avant et les panneaux de porte, en reposant sur les ailes verticales de l'élément inférieur par leur petite aile horizontale inférieure, ces deux éléments comportant, sur les bords en vis-à-vis de leurs grandes ailes horizontales supérieures, des profils complémentaires s'encastrant l'un dans l'autre en formant verrouillage de clé de voûte.

Avec cet agencement, l'aménagement isothermique du caisson tôlé d'un véhicule s'effectue très aisément par un personnel non spécialisé à partir d'un ensemble prêt à monter comportant des éléments adaptés au véhicule. Le montage s'effectue :
- en posant, sur le plancher et dans l'intervalle entre les capots des passages de roues, l'élément inférieur en forme de cuvette,
- en posant le panneau vertical avant sur la paroi transversale de l'élément inférieur et, en le fixant sur le caisson,
- en introduisant un premier élément supérieur, en prenant soin de plaquer son âme contre la paroi latérale correspondante du caisson, avec sa petite aile en appui sur l'élément inférieur,
- et en introduisant l'autre élément supérieur dans les mêmes conditions, en prenant soin d'insérer le bord de son aile supérieure entre le bord de l'aile supérieure de l'autre élément et le toit du véhicule.

Le verrouillage des deux éléments supérieurs est effectué en amenant les deux ailes supérieures dans le prolongement l'une de l'autre, afin que les profils complémentaires des bords en vis-à-vis de ces deux ailes s'encastrent l'un dans l'autre en formant un verrouillage de clé de voûte. L'aménagement est complété par la pose des deux panneaux de porte qui, lors de la fermeture des portes, viennent se plaquer contre les faces arrière en bout de l'élément inférieur en forme de cuvette et contre les deux éléments supérieurs en forme de "C".

D'autres caractéristiques et avantages ressortiront de la description qui suit en référence au dessin schématique annexé représentant à titre d'exemple une forme d'exécution de l'aménagement selon l'invention.
Figure 1 est une vue en perspective des différents éléments composant l'aménagement,
Figure 2 est une vue en perspective partielle avec coupe partielle montrant les éléments lorsqu'ils sont mis en place dans un caisson tôlé de véhicule,
Figure 3 est une vue en plan par dessus en coupe suivant 3.3 de figure 2,
Figure 4 est une vue partielle en coupe montrant, à échelle agrandie, une forme d'exécution des moyens de positionnement entre les éléments supérieurs et l'élément inférieur,
Figure 5 est une vue partielle en coupe longitudinale du véhicule équipé.

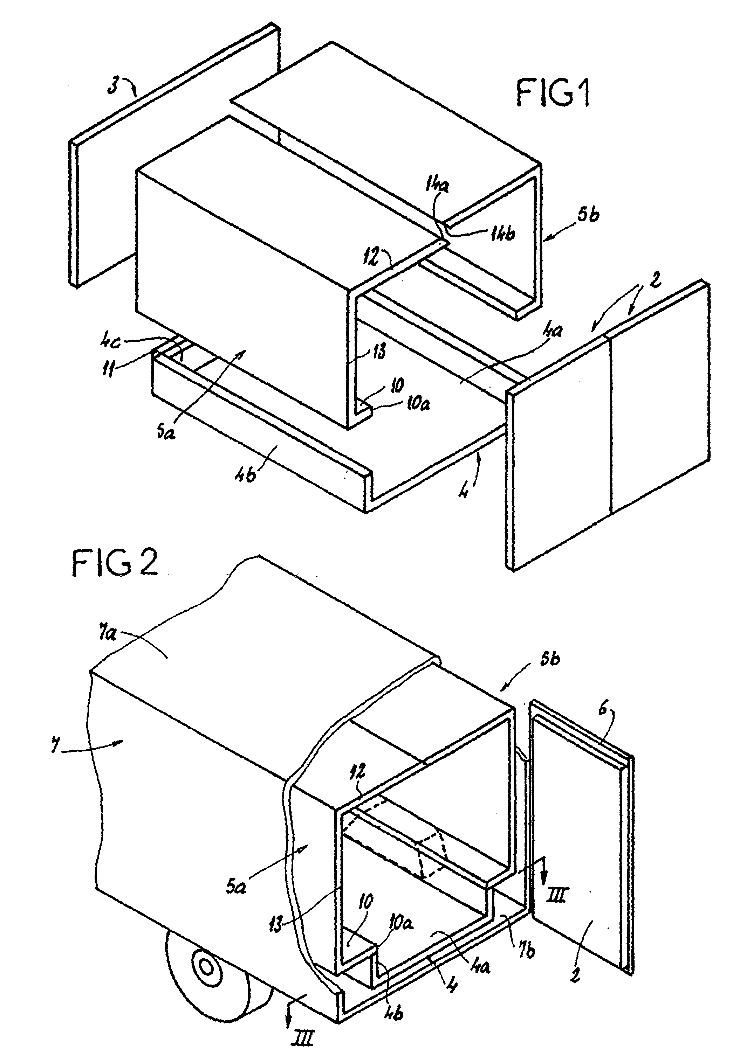

Comme le montre plus particulièrement la figure 1, l'aménagement selon l'invention est essentiellement composée de deux panneaux de porte portant la référence numérique 2, d'un panneau avant 3, d'un élément inférieur 4 et de deux éléments supérieurs 5a, 5b. Chacun de ces panneaux et éléments est composé, de façon connue, d'une couche de matériau isolant, telle qu'une mousse en polyuréthanne, protégée par au moins un parement intérieur en stratifié verre-résine.

Les deux panneaux arrière 2 ont une hauteur et une largeur leur permettant d'assurer l'isolation de chacune des portes battantes 6 disposées à l'arrière du véhicule et articulées autour d'un axe vertical.

L'élément inférieur 4 est en forme de cuvette et présente en section transversale la forme d'un "U" dont l'âme 4a est destinée à venir en contact avec le plancher 7b du caisson et dont les deux ailes 4b sont dressées verticalement vers le haut. Il comporte une paroi transversale avant 4c dont le bord est muni d'une nervure 11 formant une feuillure.

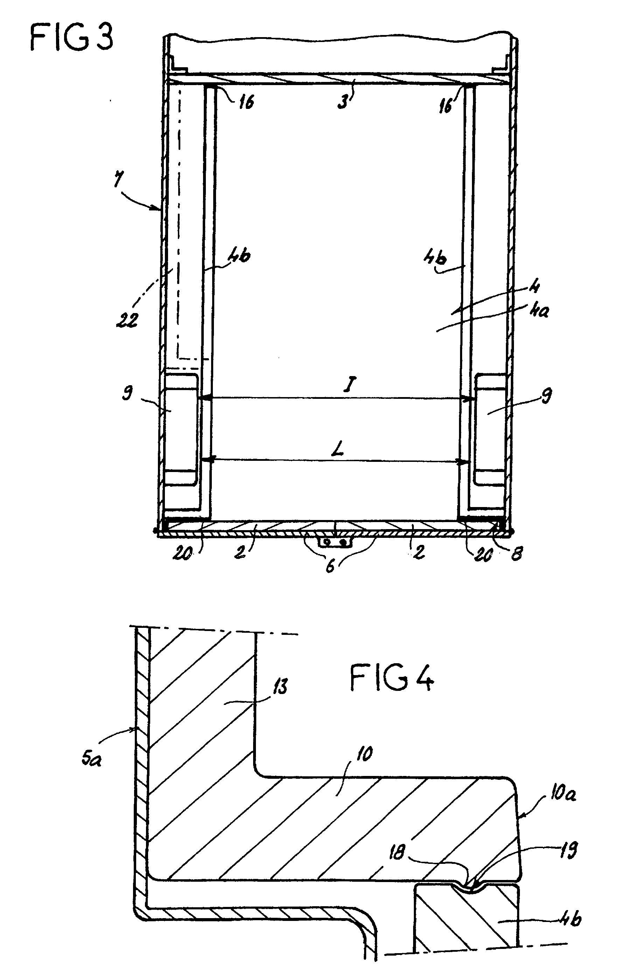

La figure 3 montre que la largeur "L" de cet élément 4 est inférieur à l'intervalle "I" entre les capots 9 de passage de roues, ceci de manière à simplifier la pose, et la figure 4 montre que les ailes 4b s'étendent verticalement au dessus de ces capots.

Le panneau avant 3, qui est destiné à être disposé transversalement à l'intérieur du caisson tôlé 7, en arrière du poste de conduite du véhicule, a une hauteur égale à la distance entre le bord supérieur de la paroi 4c et le plafond 7a du caisson et une longueur égale à la largeur interne de ce caisson qui s'étend, verticalement, du plancher au plafond de ce caisson et, transversalement, entre les deux parois latérales de celui-ci.

Chacun des éléments supérieurs 5a, 5b présente, en section transversale, la forme d'un "C" à branches inégales, et plus spécialement, comporte une branche horizontale inférieure 10 qui est plus petite que sa branche horizontale supérieure 12.

La longueur des branches inférieures 10 est définie de façon que, lorsque l'âme 13 de chaque élément 5a ou 5b est en appui contre la paroi latérale correspondante du caisson, les bords 10a de la branche 10 viennent, comme montré à la figure 4, dans le prolongement de la face interne de l'aile sous-jacente 4b de l'élément inférieur 4.

Quant aux deux branches supérieures 12, elles ont une longueur égale à la moitié de la largeur intérieure du caisson tôlé. Chacune de ces branches 12 comporte, sur son bord faisant vis-à-vis à celui de l'autre branche, un profil complémentaire de celui de l'autre bord.

Dans la forme d'exécution représentée, les bords 14a, 14b des deux branches sont taillées en biseau, et ces biseaux sont inversés.

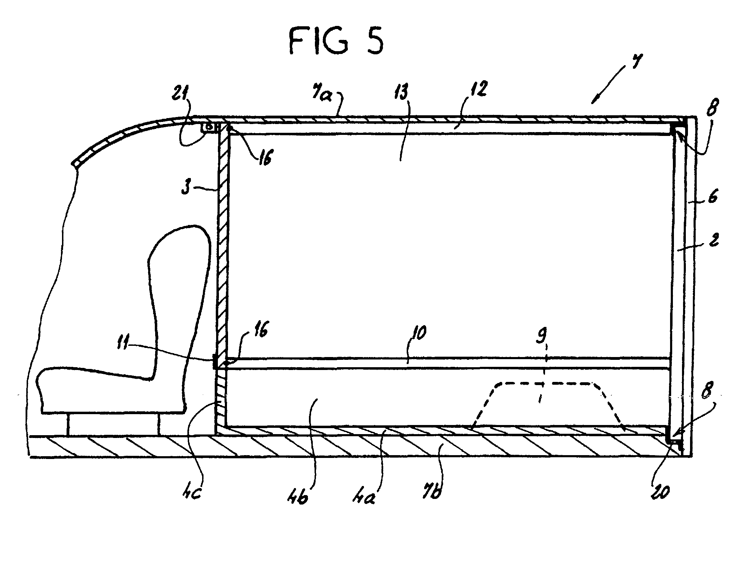

L'aménagement est mis en place en procédant d'abord à la pose de l'élément inférieur en forme de cuvette, puis à la pose du panneau vertical avant 3 qui est disposé transversalement, à la limite de la zone de séparation entre le poste de conduite et le caisson tôlé sur la paroi transversale 4c. Ce panneau, en appui contre la feuillure 11, est fixé contre les parois du caisson par des pièces 21. Ces pièces, de forme en "L", sont disposées contre sa face avant, donc hors de la zone devant former le caisson isothermique (fig.5).

L'étanchéité et la liaison entre les deux éléments est assurée par des cordons 16, en matériau isolant et adhésif, posés sur les bords de ces éléments.

A ce stade, l'élément supérieur 5b est introduit dans le caisson tôlé, jusqu'à que son bord avant vienne en contact avec le panneau avant 3, puis il est procédé à la mise en place, dans les mêmes conditions, de l'élément 5a. A la fin du montage, un cordon 16 de joint en matériau isolant et adhésif est disposé sur le bord biseauté 14a de l'élément 5a puis les deux éléments sont écartés, jusqu'au contact de leur âme contre les parois latérales du caisson tôlé, de manière que les bords biseautés 14a, 14b viennent en contact l'un avec l'autre en formant un verrouillage de clé de voûte.

Dans cette position, les âmes 13 des deux éléments supérieurs 5a, 5b, sont plaquées contre les parois latérales du caisson, tandis que leurs ailes supérieures 12 sont plaquées contre le plafond 7a et celles inférieures 10 contre l'élément inférieur 4. Cela suffit à assurer la liaison des éléments entre eux, et avec le caisson, sans qu'il soit indispensable de recourir à d'autres moyens de fixation.

La figure 4 montre que le positionnement des petites branches horizontales 10 des éléments supérieurs 5a, 5b sur les ailes 4b de l'élément inférieur 4 s'effectue d'autant mieux que chacune de ces branches 10 comporte, en saillie de sa face inférieure, un bourrelet longitudinal 18 s'insérant dans une gorge longitudinale 19 ménagée sur le chant supérieur de l'aile 4b correspondante. Il est évident que la gorge 19 reçoit préalablement un cordon de joint isolant et adhésif qui assure ainsi l'étanchéité de la liaison entre les différents éléments. Il est ensuite procédé à la fixation des panneaux 2 sur les portes arrière 6.

Les figures 3 et 5 montrent que lorsque les portes sont en position de fermeture, leurs panneaux isolants 2 viennent s'appliquer dans des feuillures 8 des éléments inférieur 4 et supérieurs 5a, 5b et contre les faces arrière, respectivement, de l'élément inférieur 4 et des deux éléments supérieurs 5a, 5b. Pour améliorer l'étanchéité de cet appui, les faces en bout des éléments 4, 5a et 5b peuvent être équipés de joints 20, à lèvres ou en forme de cordon compressible.

Il ressort de la description qui précède que la mise en place de l'aménagement isothermique dans le caisson tôlé ne nécessite aucune compétence particulière et peut donc être effectuée directement par le personnel d'un garage, sans avoir recours à un personnel spécialisé. Cette simplicité de montage permet de réduire le temps de montage et le coût global de la transformation d'un caisson tôlé en caisson isotherme.

Cet aménagement est applicable également aux véhicules comportant une seule porte arrière pivotante ou relevable, et aux véhicules comportant, en plus, une porte latérale, pivotante ou coulissante. Dans cette dernière application, et comme montré en traits mixtes à la figure 3, la cuvette de l'élément inférieur 4 comporte, au-delà des capots 9 pour le passage des roues, un élargissement 22 amenant ses ailes 4b contre les parois latérales du caisson, et les éléments supérieurs sont aménagés en conséquence, tout en conservant leurs possibilités de montage basculant avec verrouillage par la clé de voûte.

L'ensemble des éléments peut, bien après sa mise en place, être démonté, par exemple, s'il n'est plus utile ou pour équiper un autre véhicule de même type.

Ce démontage s'effectue" aisément et sans aucune détérioration des éléments.

## Revendications

1. Aménagement isotherme pour véhicule utilitaire à caisson tôlé à portes arrière battantes **caractérisé en ce qu**'il comprend:
- un ou deux panneaux (2) se fixant contre la ou les portes arrière (6) du véhicule,
- un élément inférieur (4) en forme de cuvette et composé d'un fond (4a), de deux ailes verticales (4b) et d'une paroi transversale avant (4c), les deux ailes (4b) ayant une hauteur supérieure à l'encombrement vertical des capots (9) de passages de roues saillant du plancher du caisson tôlé,
- un panneau vertical avant (3), venant en appui sur la paroi transversale avant (4c) de la cuvette de l'élément inférieur (4),
- et deux éléments supérieurs (5a, 5b) ayant, en section transversale, la forme d'un "C" à branches inégales, ces éléments s'insérant, verticalement, entre l'élément inférieur (4) et le toit (7a) du caisson (7), et, longitudinalement, entre le panneau avant (3) et les panneaux (2) de porte, en reposant sur les ailes verticales (4b) de l'élément inférieur (4) par leur petite aile horizontale inférieure (10), ces deux éléments supérieurs comportant, sur les bords (14a, 14b) en vis-à-vis de leurs grandes ailes horizontales supérieures (12), des profils complémentaires s'encastrant l'un dans l'autre en formant verrouillage de clé de voûte.

2. Aménagement isothermique selon la revendication 1 **caractérisé en ce que** les bords en vis-à-vis (14a, 14b) des grandes ailes horizontales supérieures (12) des éléments supérieurs (5a, 5b) sont en biseaux inversés et au moins l'un de ces biseaux comporte un joint d'étanchéité coopérant avec l'autre biseau.

3. Aménagement isothermique selon la revendication 1, **caractérisé en ce qu'**un cordon (16) de matière isolante et adhésive est interposé entre la face du panneau vertical avant (3) venant en contact avec les faces en bout des éléments, inférieur (4) et supérieurs (5a, 5b) et entre les ailes (4b) de l'élément inférieur (4) et la petite branche horizontale (10) des éléments supérieurs (5a, 5b).

## Claims

1. A temperature-controlled arrangement for a commercial vehicle having a metal-panel box and folding rear doors, **characterised in that** it comprises:
- one or two panels (2) fixed to the rear door or rear doors (6) of the vehicle,
- a lower element (4) in the form of a tray, composed of a base (4a), two vertical wings (4b) and a transverse front wall (4c), the two wings (4b) having a greater height than the overall height of the wheel arches (9) for wheels projecting from the floor of the metal-panel box,
- a vertical front panel (3) coming to bear against the transverse front wall (4c) of the tray of the lower element (4),
- and two upper elements (5a, 5b) having in cross-section the shape of a C with unequal limbs, these elements being inserted vertically between the lower element (4) and the roof (7a) of the box (7) and longitudinally between the front panel (3) and the door panels (2), resting on the vertical wings (4b) of the lower element (4) by means of their small lower horizontal wing (10), these two upper elements having, on the opposing edges (14a, 14b) of their large upper horizontal wings (12), complementary profiles which fit into one another to form a lock in the manner of a keystone.

2. A temperature-controlled arrangement according to Claim 1, **characterised in that** the opposing edges (14a, 14b) of the large upper horizontal wings (12) of the upper elements (5a, 5b) are in the form of inverted bevels, and at least one of these bevels has a sealing gasket cooperating with the other bevel.

3. A temperature-controlled arrangement according to Claim 1, **characterised in that** a bead (16) of insulating adhesive material is placed between the face of the front vertical panel (3) coming into contact with the end faces of the lower element (4) and the upper elements (5a, 5b) and between the wings (4b) of the lower element (4) and the small horizontal limb (10) of the upper elements (5a, 5b).

## Patentansprüche

1. Thermos-Einrichtung für ein Nutzfahrzeug mit Blechkasten mit hinteren Flügeltüren, **dadurch gekennzeichnet, dass** sie umfasst:
- eine oder zwei Platten (2), die an der hinteren Tür oder an den hinteren Türen (6) des Fahrzeugs befestigt ist/sind,
- ein wannenförmiges unteres Element (4), das zusammengesetzt ist aus einem Boden (4a), zwei vertikalen Seitenflügeln (4b) und einer vorderen Querwand (4c), wobei die zwei Seitenflügel (4b) eine größere Hohe aufweisen als der vertikale Platzbedarf der Radkastenhauben (9), welche über den Boden des Blechkastens vorstehen,
- eine vordere vertikale Platte (3), die sich auf die vordere Querwand (4c) der Wanne des unteren Elements (4) stützt,
- und zwei obere Elemente (5a, 5b), die im Querschnitt die Form eines "C" mit ungleichen Schenkel aufweisen, wobei diese Elemente vertikal zwischen dem unteren Element (4) und dem Dach (7a) des Kastens (7) sowie longitudinal zwischen der vorderen Platte (3) und den Türplatten (2) eingefügt sind, wobei sie mit ihrem kleinen unteren horizontalen Seitenflügel (10) auf den vertikalen Seitenflügeln (4b) des unteren Elements (4) aufliegen, wobei diese zwei oberen Elemente an ihren gegenüberliegenden Kanten (14a, 14b) ihrer großen oberen horizontalen Seitenflügel (12) komplementäre Profile umfassen, die ineinander greifen und so einen Verschluss des Kastenscheitels ausbilden.

2. Thermos-Einrichtung nach Anspruch 1, **dadurch gekennzeichnet, dass** die gegenüberliegenden Kanten (14a, 14b) der großen oberen horizontalen Seitenflügel (12) der oberen Elemente (5a, 5b) gegenläufig abgeschrägt ausgebildet sind und wenigstens eine von diesen Abschrägungen eine Dichtung trägt, die mit der anderen Abschrägung zusammenwirkt.

3. Thermos-Einrichtung nach Anspruch 1, **dadurch gekennzeichnet, dass** ein Band (16) aus isolierendem und klebendem Material zwischen die Fläche der vorderen vertikalen Platte (3), die in Kontakt mit den Stimflächen des unteren Elements (4) und der oberen Elemente (5a, 5b) kommt, und zwischen die Seitenflügel (4b) des unteren Elements (4) und dem kleinen horizontalen Schenkel (10) der unteren Elemente (5a, 5b) eingefügt ist.
